# EUROPEAN PATENT SPECIFICATION

(11) **EP 0 726 129 B1**
(45) Date of publication and mention of the grant of the patent: **13.11.2002**
(21) Application number: 95120311.6
(22) Date of filing: 21.12.1995
(51) Int. Cl.: B29C 33/70, B29C 45/80, B29C 45/84

(54) **Mold with an on-board counter**
Form mit eingebautem Zähler
Moule avec compteur intégré

(30) Priority: 30.12.1994 US 367396; 12.09.1995 US 528516
(43) Date of publication of application: 14.08.1996
(73) Proprietor: D & L INCORPORATED, Wauconda, Illinois 60084 (US)
(72) Inventor: Starkey, Glenn, Lake Zurich, Illinois 60047 (US)
(74) Representative: Manitz, Finsterwald & Partner

(56) References cited:
- EP-A- 0 355 606
- EP-A- 0 497 991
- FR-A- 2 473 948
- FR-A- 2 620 370
- JP-A- 4 027 513
- JP-A- 5 116 129
- US-A- 4 010 679
- US-A- 4 279 582
- US-A- 4 493 987
- US-A- 5 057 000
- PATENT ABSTRACTS OF JAPAN vol. 014, no. 110 (M-0943), 28 February 1990 & JP 01 313116 A (Y H CONSULTING:KK), 18 December 1989,
- PATENT ABSTRACTS OF JAPAN vol. 018, no. 585 (M-1700), 9 November 1994 & JP 06 218590 A (UCHIHARA SEISAKUSHO:KK), 9 August 1994,

## Description

### Field of the Invention

This invention relates to a mold for use in a plastic injection molding press wherein the mold is used to manufacture plastic parts.

### Background of the Invention

The document JP-A-5116129 describes an automated control system for storage and use of molds for pressure cast molding. The Document JP-A-4027513 discloses a molding device with an apparatus for actuating a counter which includes a plunger mounted transversely to the drive shaft of the counter, wherein the plunger is connected to the counter by a series of pivot arms, a ratchet arm, and a ratchet device mounted to the drive shaft of the counter.

In the past, injection molds were often left in the press and were run for very long part runs; and the mold was seldom removed from the press for storage. Today however, many manufacturers of plastic parts utilize "just-in-time" practices wherein the purchaser does not want an inventory of large quantities of plastic parts, but wants the parts to be made in smaller batches and to be delivered on an "as-needed" basis. In these past systems, the molds were continuously associated with the press so that counters on the press itself could be relied upon to provide the number of cycles of the mold and this was used to provide information relative to preventative maintenance, such as cleaning of the mold or lubricating critical surfaces. Where a number of molds are taken in and out of the press for just-in-time manufacturing to produce different parts on an as-needed basis, the press counters which count the number of cycles, can no longer be relied upon for maintenance schedules because a series of different molds is used in the press for relatively short periods of time. Currently, some records are kept as to when and how long a particular mold has been run, usually such records are kept in a computer log or in a paper maintenance record. Such computer logs or paper records may be used to schedule preventive maintenance of the mold. Sometimes such computer or paper records may not be an accurate or positive means of assuring that the proper maintenance is being scheduled for each of the various molds being used with the same or different molding presses. Obviously, without the proper maintenance of an injection mold, damage may occur and down time may also be the result.

Preventive maintenance of a mold is a much more critical issue today, particularly for just-in-time manufacturing parts on an as-needed basis. That is, with the advent of new, engineered thermoplastic materials, the molds are often run faster, hotter and must be kept cleaner than they had to be in the past. Therefore, the adequate maintenance for each mold is a much more critical issue today than in the past. Moreover, because molds are regularly changed in and out of presses and may be transported to various manufacturing sites, they are often banged around and subjected to shock stresses not normally encountered when in the press. Thus, it is desirable to provide a reliable count of the cycles a particular mold has undergone with a rugged counter which is able to withstand the hostile physical and chemical conditions to which the mold may be subjected.

### Summary of the Invention

In accordance with the present invention, an injection plastic mold is provided with its own on-board monitor or counter, which is actuated with each opening and closing cycle of the mold to maintain a count of the operating cycles performed. This count is maintained with the mold, whether the mold is on the press or a storage rack. The counter or monitor must be relatively inexpensive and unobtrusive and capable of withstanding harsh temperatures and shock that are encountered in an injection molding environment. The counter is incorporated into a mold half to remain with the mold when it is stored away from a molding machine, when operated during an initial set-up operation, and when operated during a production run. The counter should be hermetically sealed against the intrusion of damaging liquids or chemicals and in a protective housing to protect against shock, etc. According to the invention, a mold according to claim 1, comprising a mechanical counter, is provided. A counter assembly is employed, preferably, utilizing an off-the-shelf, self-contained stroke mechanical counter with the counter preferably being hermetically sealed so as to prevent intrusion of damaging liquids and chemicals to the counting mechanism contained therein. The mold includes a mold body having first and second mold halves for molding a plastic part with the portions being movable from a stored, out-of-the-press position to an operating position in the molding press for movement between open and closed positions. In the closed position, the first and second halves are brought together and define a cavity for molding a plastic part with the part having a part line defined at the juncture of the first and second mold halves. An actuating mechanism is associated with the counter to be engageable with one of the mold halves as they are moved to the closed position. A relatively small protective housing encompassing the counter's housing and internal counting mechanism is provided and is mounted to the other of the mold halves to protect the counter against harsh operating conditions in the mold press.

As is apparent, the mold having the on-board counter as described above is relatively inexpensive as it employs a well-known, off-the-shelf mechanical counter having a conventional counting mechanism. The off-the-shelf counter is converted for use in the hostile injection molding environment by the provision of the above-described protective housing which is mounted to a mold half so that it is carried therewith at all times in and out of the press. Thus, the converted counter is particularly useful where only a count of molding cycles is desired and/or the injection molding operating conditions limit the effectiveness of battery powered devices, such as where high operating temperature ranges are encountered. The converted counter is a rugged and simple, relatively inexpensive device well-adapted for use in injection molds which encounter harsh temperatures and shock.

Preferably, the protective housing includes a housing body having a counter receiving cavity formed therein. An identification plate is removably connectable to the housing body to encase the counter in the cavity, with the plate defining a window so that the window is aligned with the counter display when the plate is connected to the housing body, thereby allowing the display to be viewed through the window when the counter is contained in the protective housing. The identification plate can include indicia to identify the part and the mold. Where the counter assembly described herein is desired to be used with another mold, the identification plate can be removed and replaced with another identification plate which indicates the new mold with which the counter is to be associated and the part formed by that mold.

The protective housing can be formed from a tough, plastic nylon material so as to provide the counter assembly with resistance to harsh temperatures and shock which are typically encountered during injection molding operations.

In one form, the protective housing defines an aperture through which the counter actuating mechanism can extend exteriorly of the housing to engage the one mold half as the mold halves are moved to the closed position.

The internal operating mechanism of the counter can include a rotatable elongate stem which causes the counter to register a count upon sufficient rotation of the stem. A transversely extending pin can be mounted to the stem. The counter actuating mechanism includes a cam actuator having cam surfaces defining arcuate paths. The cam actuator is mounted on the stem so that the pin engages the cam surfaces and is caused to traverse the arcuate paths as the mold halves move to the closed position to cause the stem to rotate sufficiently for registering a count with the counter.

In one form, the other mold half includes a planar surface which defines the part line and a pocket is formed within the other mold portion with the protective housing received in the pocket flush with the planar surface and the actuating mechanism extending from the planar surface. In this manner, the counter assembly is positioned in the mold to be unobtrusive so as not to interfere with molding operations and not to interfere with moving the mold into and out of mold presses.

Manifestly, the counter assembly of the present invention can be mounted to the mold at a variety of different locations while still being actuated with each mold cycle. So, for instance, in another form of the invention, the other mold half includes a bottom support member or rail and the protective housing is mounted in the bottom support member. To allow the actuating mechanism to extend beyond the part line, a bore is formed in the other mold half extending from the support member to the part line with the actuating mechanism including an elongate rod which extends through the bore between the counter and the part line.

Where machining pockets into the mold halves or rails is not desirable, the counter assembly can be attached to a side surface of the mold half with an external block being mounted to a side surface of the other mold half so that the external block engages the actuating mechanism of the counter assembly as the mold halves are moved to the closed position, thereby registering a count with the counting mechanism.

A mold having an on-board mechanical counter for counting operations of the mold and for staying with the mold when the mold is removed from a mold press and stored is provided. The mold includes a mold body having halves which close and open for forming parts. A stroke counting mechanism is securely mounted on board the mold body for counting movements of the closing and opening of the mold halves to and from each other. A rotatable plunger causes the stroke counting mechanism to register a count upon sufficient rotation of the plunger. A cam actuating is mounted on the plunger which is engageable by one closing and opening half as it moves toward the other closing and opening half to cause the actuator to move in a linear direction while causing the plunger to rotate. With the mold halves in a closed position, the plunger is rotated sufficiently by the cam actuator to cause the plunger to register a count with the stroke counting mechanism.

### Brief Description of the Drawings

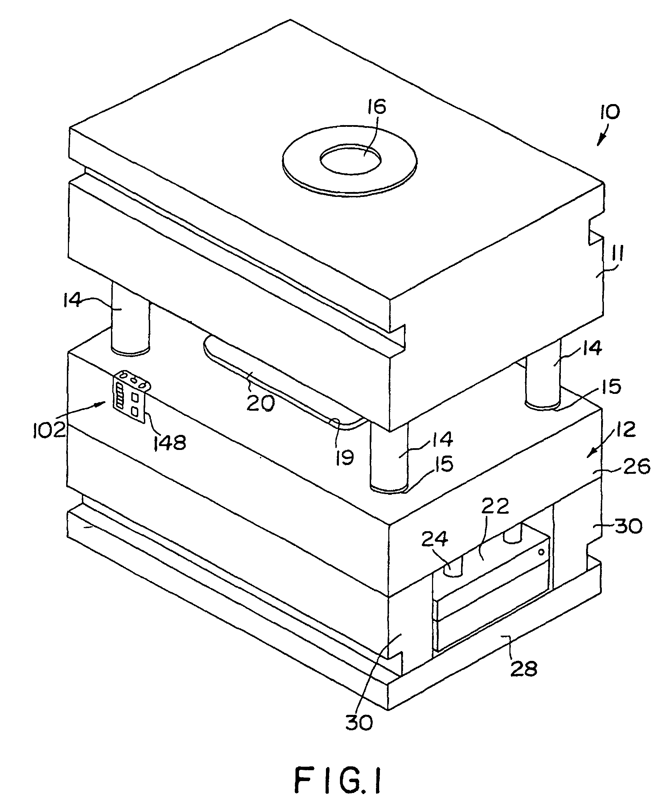

FIG. 1 is a partial, perspective view of a molding press having a mold with a monitor or counter positioned therein;
FIG. 2 is an exploded perspective view of a counter assembly including a protective housing and a counter actuating mechanism according to the invention;
FIG. 3 is an elevational view of the assembled counter assembly of FIG. 2 showing the counter actuating mechanism in a non-engaged, extended state;
FIG. 4 is an elevational view, similar to FIG. 3, showing the counter actuating mechanism in a depressed, engaged state;
FIG. 5 is a top plan view of the protective housing for the counter assembly including a main housing body and a bezel identification plate;
FIG. 6 is a sectional view of the main housing body;
FIG. 7 is a top plan view of the housing body;
FIG. 8 is a sectional view of the bezel identification plate having a window formed therein;
FIG. 9 is a front elevational view of the off-the-shelf mechanical counter including a stem of the counter actuating mechanism;
FIG. 10 is a side elevational view of a cam actuator of the counter actuating mechanism;
FIG. 11 is a partial perspective view, similar to FIG. 1, of a mold having the counter assembly of FIG. 2 mounted therein;
FIG. 12 is a partial perspective view, similar to FIG. 1, of a mold showing the counter assembly of FIG. 2 modified with an elongate rod so as to enable the counter assembly to be mounted in a lower support rail of the mold;
FIG. 13 is a partial perspective view, similar to FIG. 1, of a mold in a closed, part forming position and having the counter assembly of FIG. 2 mounted to a side surface of the lower mold half and an external block mounted to a side surface of the upper mold half;
FIG. 14 is an exploded elevational view of a modified cam actuator and elongate rod for use in the rail mounting assembly illustrated in FIG. 12; and
FIG. 15 is an elevational view of the counter assembly and external block mounted on the side surfaces of the mold halves as illustrated in FIG. 13.

### Detailed Description of the Preferred Embodiment

As shown in the drawings for purposes for illustration, the invention is embodied in a mold 10, which includes an upper mold half 11 and a lower mold half 12. In this instance, the lower mold half 12 is shown in a lowered, open position and is mounted for vertical, reciprocal movement to an upper, closed position on four vertical posts 14 which are stationary or fixably mounted at their upper ends to the upper mold half 11. The lower mold half 12 has post-receiving bores 15 which slide along the respective posts 14 as the lower mold half is raised and lowered to complete a typical molding cycle by a molding press (not shown). The particular mold has an upper sprue or opening 16 through which the hot, molten plastic may be injected into a cavity in the upper mold half as well as a cavity 19 in the lower mold half which mates with the upper mold cavity to form the part 20. The part 20 is typically ejected by an upward movement of an ejector plate 22, which is mounted for vertical movement on four, vertical, small posts 24. The ejector plate 22 is mounted between the upper, horizontal mold block 26 and a lower, horizontal plate 28. A pair of side plates 30 connect the upper mold block 26 to the lower mold plate 28. Manifestly, the mold portions 11 and 12 may come in various sizes and shapes from that illustrated herein.

In accordance with the present invention, the mold 10 is provided with its own counter 102.

It may be undesirable to machine or provide a seat or pocket in existing molds to which is desired to attach a monitor. In such instances, the existing molds may have brackets or other devices attached thereto for mounting the monitor, i.e., to a sidewall of the mold, with the actuator projecting therefrom to be engaged and operated upon by relative movement between the mold portions between their opened and closed positions. Thus, the brackets or other devices with the extended actuator may allow the retrofitting of existing molds with such a monitor, without having to have a cavity to form therein or a specific space to accommodate the monitor.

The term mold as used herein refers to mold bases or frames sold by mold manufacturers without the final cavity therein, as well as refers to molds that actually have the cavities therein. Thus, it is contemplated that a mold base or frame may be sold with a monitor or counter therein prior to an actual cavity being formed.

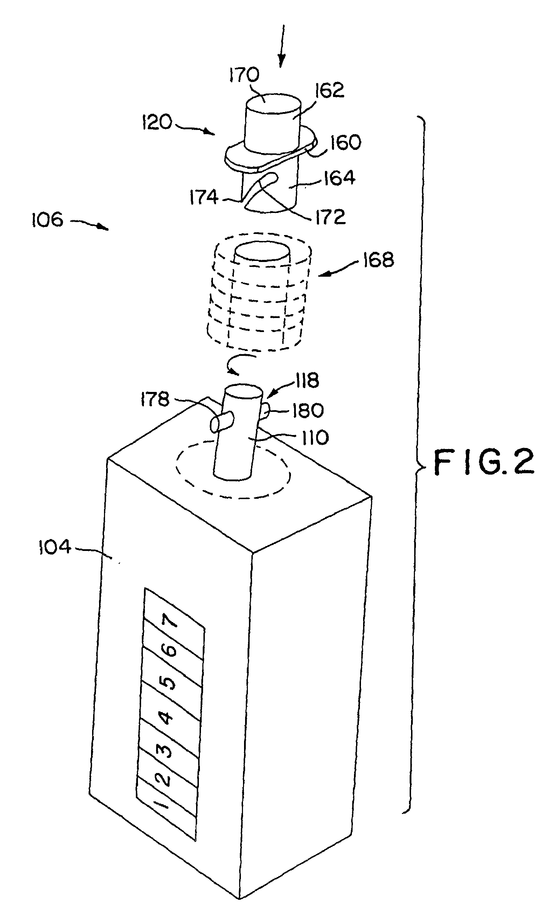

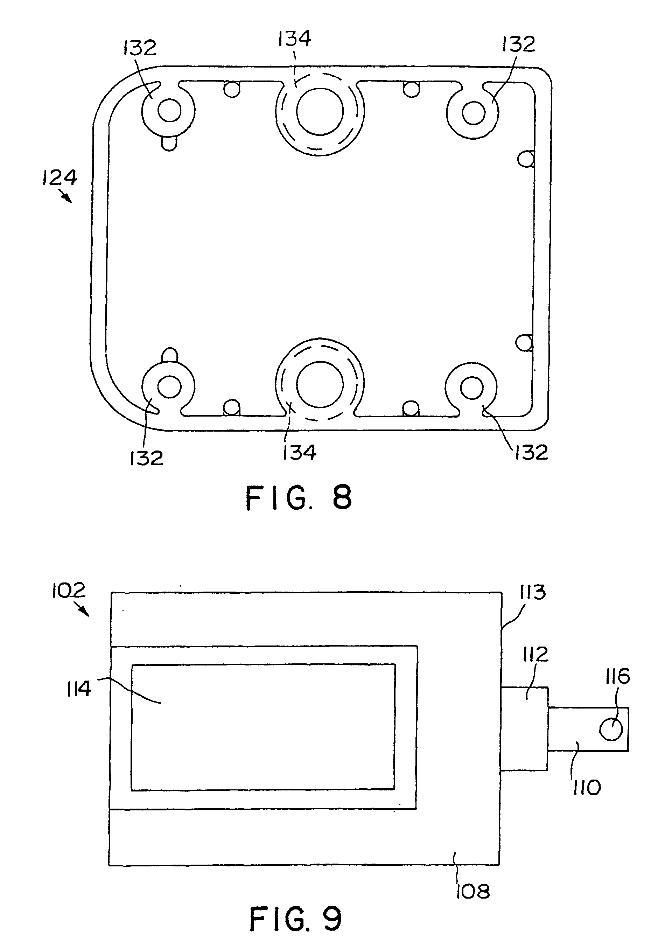

In an embodiment of the invention shown in FIGS. 2-15, a mold and counter assembly 100 is provided which utilizes a relatively inexpensive off-the-shelf mechanical counter 102 (FIG. 9) having a conventional stroke counting mechanism therein 103. The mechanical counter 102 is adapted for use in an injection mold by the provision of a protective housing 104 and counter actuating mechanism generally designated 106, as best seen in FIG. 2. The protective housing 104 properly orients the counter 102 so that the counter actuating mechanism 106 extends from the protective housing 104 in position to be engaged by a mold half for registering a count of mold operating cycles as they occur. The protective housing 104 can be formed from a tough plastic material, such as nylon, to safeguard the mechanical counter 102 against exposure to the harsh molding environment.

More specifically, and referring to FIG. 9, the mechanical counter 102 is a conventional inexpensive stroke counter available off-the-shelf and including a counting mechanism which is hermetically sealed in counter housing 108. The counting mechanism registers a count upon sufficient rotation of plunger or stem 110 associated therewith. The stem 110 extends from the counter housing 108 through sealing bushing 112 on the top surface 113 of the housing 108. Upon sufficient rotation of the stem 110, the stroke counter registers a count with the counting mechanism and displays the same in display area 114.

To modify the stroke counter 102 for use with the mold and counter assembly 100, a cross bore 116 is drilled in the stem 110 at the end 118 of the stem 110 extending out of the counter housing 108. It has been found that it is easiest to drill the bore 116 in the stem 110 with the stem 110 depressed so that it is in contact with the back of the counter housing 108. After drilling the cross bore 116, a pin 118 (FIG. 2) is inserted in the bore 116 for engagement by a cam actuator 120, which will be more fully described herein.

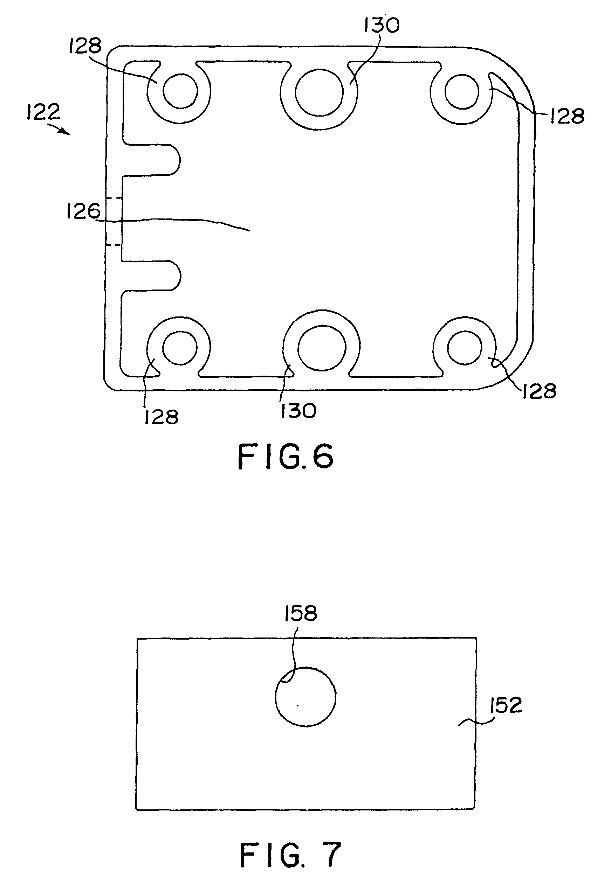

To protect and position the stroke counter 102 to be contained within a mold 100, protective housing 104 is provided. Referring to FIGS. 6-8, the protective housing has a two-part construction with a main housing body 122 and a removable identification plate 124. The plate 124 can be provided with indicia to specify the mold and part formed thereby and is removable so that the counter assembly can be used with different molds, if desired. The main housing body 122 includes a central cavity 126 which snugly receives the stroke counter 102 therein. The housing body 122 has a series of threaded bosses around its periphery with threaded bosses 128 at each corner for connecting the housing body 122 to the bezel identification plate 124 and intermediate bosses 130 for mounting the assembled protective housing 104 with the counter 102 therein to a mold half or support rail. The identification plate 124 includes corresponding corner bosses 132 and intermediate bosses 134 which cooperate with the housing bosses and allows the plate 124 to be attached to the main housing body 122 and the protective housing 104, including the mechanical counter 102, to be mounted to a mold half or rail, as by screws 136 extending through aligned intermediate bosses 130 and 134 and into tapped holes (not shown) formed on the mold.

Thus, with the mechanical counter 102 received in the housing body cavity 126 and with the identification plate 124 connected to the housing body 124, a relatively inexpensive, compact and rugged mechanical counter assembly 138 is provided for use with injection molds. The counter assembly 138 can be mounted to the molds in a variety of fashions so that the operation of the mold press in bringing mold halves together to a closed position and opening the mold halves after part formation causes the counter 102 to alternatively advance one count and display the count for keeping track of the number of cycles a particular mold has undergone.

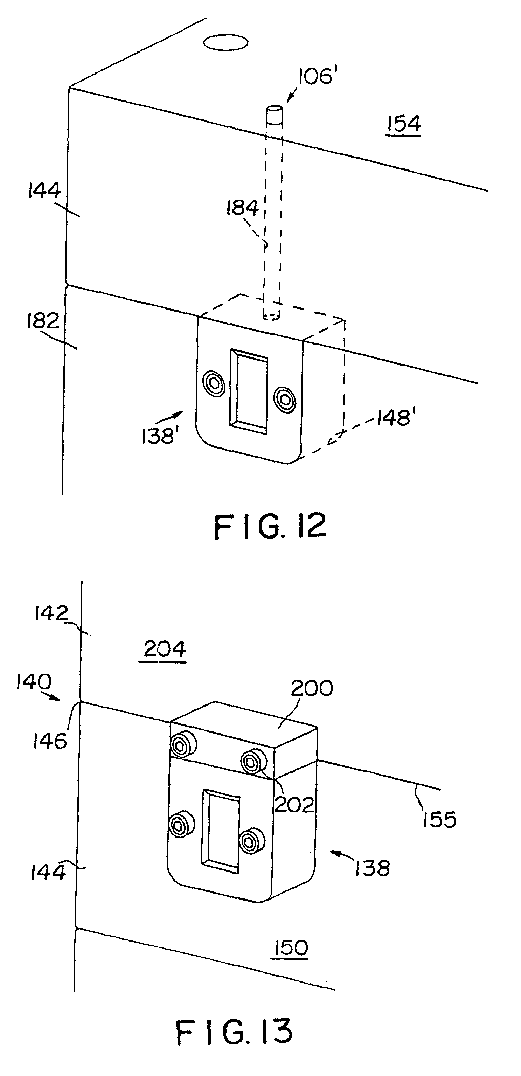

FIGS. 11-13 illustrate several systems for mounting the counter assembly 138 to register counts of molding cycles. Referring to FIG. 11, the counter assembly 138 can be mounted in a mold 140 so that it is recessed therein. Typically, the mold 140 will consist of an upper mold half 142 and a lower mold half 144 which, when brought together by the press, define a cavity which has hot, molten plastic injected therein to form a plastic part. Thus, the juncture of the upper mold half 142 and the lower mold half 144, when brought together in a closed part forming position, define a part line 146 therebetween.

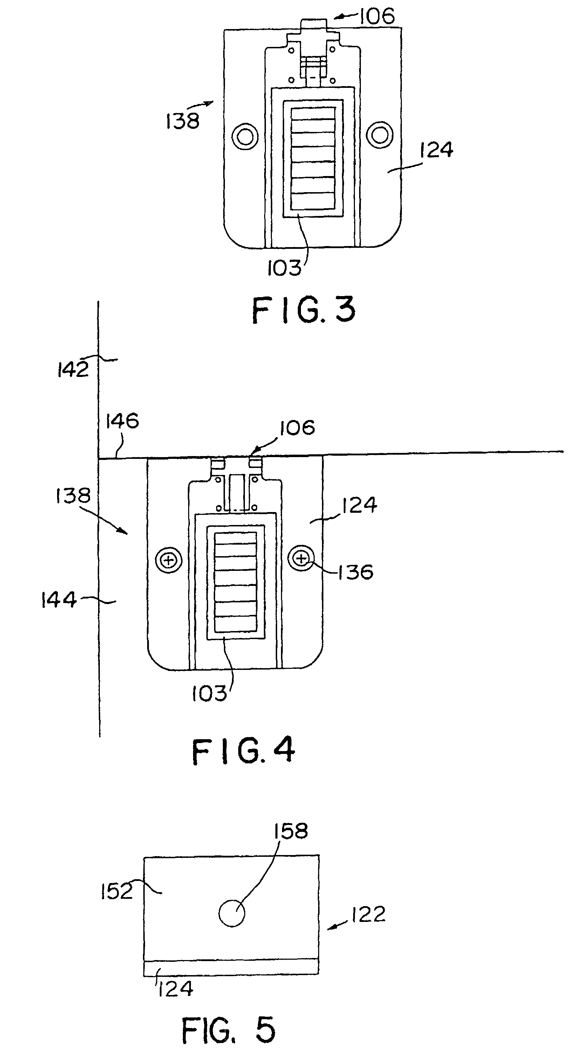

To mount the counter assembly 138 as illustrated in FIG. 11, a pocket 148 is machined in the side 150 of the lower mold half 144, such as done with side locks provided on molds. Holes (not shown) are then tapped in the pocket with the counter assembly 138 being received in the pocket 148 so that the intermediate bosses 130 and 134 are aligned with the tapped holes to allow the counter assembly 138 to be secured to the lower mold half 144 in the pocket 148 by screws 136. The protective housing 104 and pocket 148 are configured so that the top surface 152 of the protective housing is flush with the top surface 154 of the lower mold half 144 and the front surface 156 of the identification plate 124 is flush with the mold side 150. The top housing surface 152 is provided with a stem aperture 158 (FIGS. 5 and 7) for receipt of the stem 110 therethrough. In this manner, the counter actuating mechanism 106 can extend above the part line 146 as defined by the top surface 154 of the lower mold half 144 and bottom surface 155 of the upper mold half 142, as shown in FIG. 3, and can be engaged by the bottom surface 155 of the upper mold half 142 as the upper and lower mold halves 142 and 144 are moved to their closed position, as seen in FIG. 4.

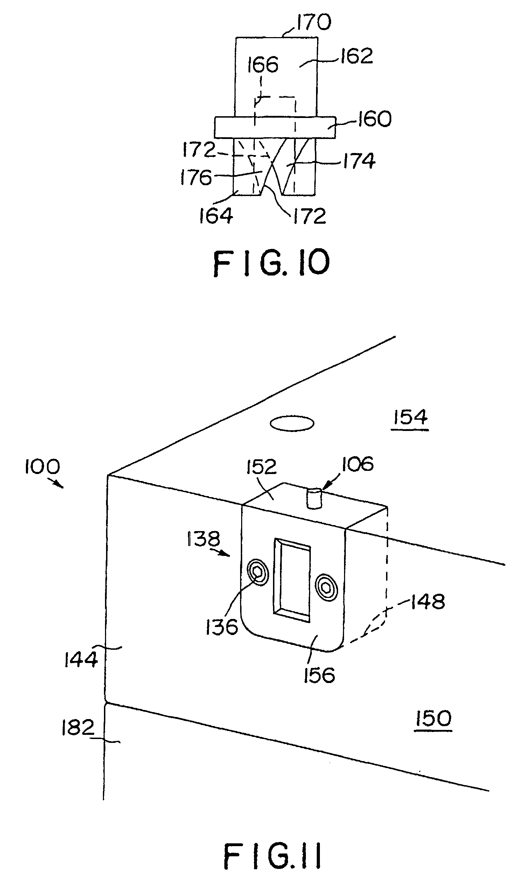

To provide the requisite rotary motion to the stem 110 for registering a count with the stroke counter 102 as the mold halves 142 and 144 are moved to their are closed position, a cam actuator 120 is spring loaded on the stem 110. Referring to FIGS. 2 and 10, the cam actuator 120 includes a transverse spring engaging surface 160 intermediate a top cap portion 162 and a bottom pin engaging portion 164 thereof. A central longitudinal bore 166 extends from the bottom of the pin engaging portion 164 to just above the spring engaging portion 160 in the cap portion 162. The central bore 166 can have a length generally corresponding to the length of the stem 110 in its extended state as it projects from the protective housing 104.

A spring 168 is mounted between the top surface 152 of the protective housing 104 and the spring engaging portion 160 of the cam actuator 120 to continuously bias the cam actuator 120 to its extended state shown in FIG. 3. The top surface 170 of the cam portion 162 is adapted to be engaged so as to push the stem 110 against the bias of the spring 168 into a depressed position while rotating the spring to register a count with the stroke counter 102, as illustrated in FIG. 4. To do this, the pin engaging portion 164 of the cam actuator 120 includes cam surfaces 172 for engagement with the pin 118 of the stem 110. The cam surfaces 172 form arcuate paths 174 and 176 spaced 180° from each other around the stem all along their paths with the pin portions 178 and 180 extending from either side of the stem 110 traversing respective arcuate paths as the top cap surface 170 is engaged and the cam actuator 120 is depressed. In this manner, the stem is caused to rotate sufficient to register a count with the stroke counter 102. Thus, with the counter actuating mechanism 106 described herein including the cam actuator 120 and the rotatable stem 110 and pin 118, the linear, straight line movement of the mold halves 142 and 144 towards a closed position is converted to a rotary movement of the stem 110 which registers a count in the counter assembly 138.

While the mold and counter assembly 100 illustrated in FIG. 11 shows the counter assembly 138 mounted in pocket 148 so that the counter actuating mechanism 106 extends from the protective housing 104 to above the top surface 154 of the lower mold half 144, i.e., above the part line 146, it will be apparent that the counter assembly 138 described herein can be mounted to the mold 140 in a variety of other locations while still being relatively unobtrusive and providing for a ready indication of the cycles the particular mold to which it is mounted has undergone.

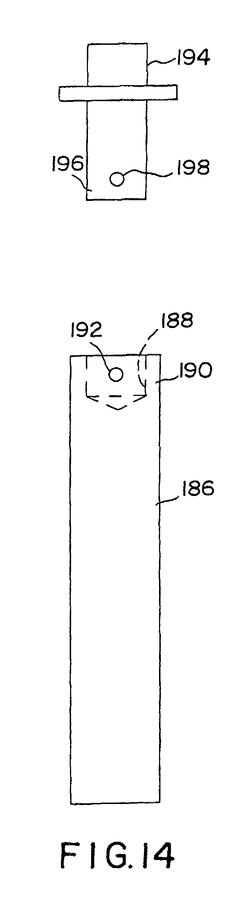

For example, FIG. 12 illustrates a counter assembly 138' which is mounted in a similar pocket 148' formed in a lower support side rail 182 for the lower mold half 144. The lower mold half 144 is provided with a bore 184 which extends from the side rail 182 to the top surface 154 of the lower mold half 144. The cam actuator 120' for the rail mounted counter assembly 138' includes an elongate extension rod 186 which extends through the bore 184 with the bore and elongate extension corresponding to the width of the lower mold half 144, typically being approximately 20.32 cm (8-inches). The elongate extension 186 is best seen in FIG. 14 and is provided with a counter bore 188 at its upper end 190 with a transverse hole 192 extending through the extension 186 at the upper end 190 in communication with the bore 188. A top cap 194 is provided for extending above the top surface 154 of the mold half 144 and is connected to the extension 186 at its lower end 196 by a dowel pin (not shown) which can be inserted through a hole 198 formed in the lower end 196 and aligned with the hole 192 at the upper end 190 of the extension 186 with the lower end 196 of the cap 194 inserted in the bore 188 of the extension 186.

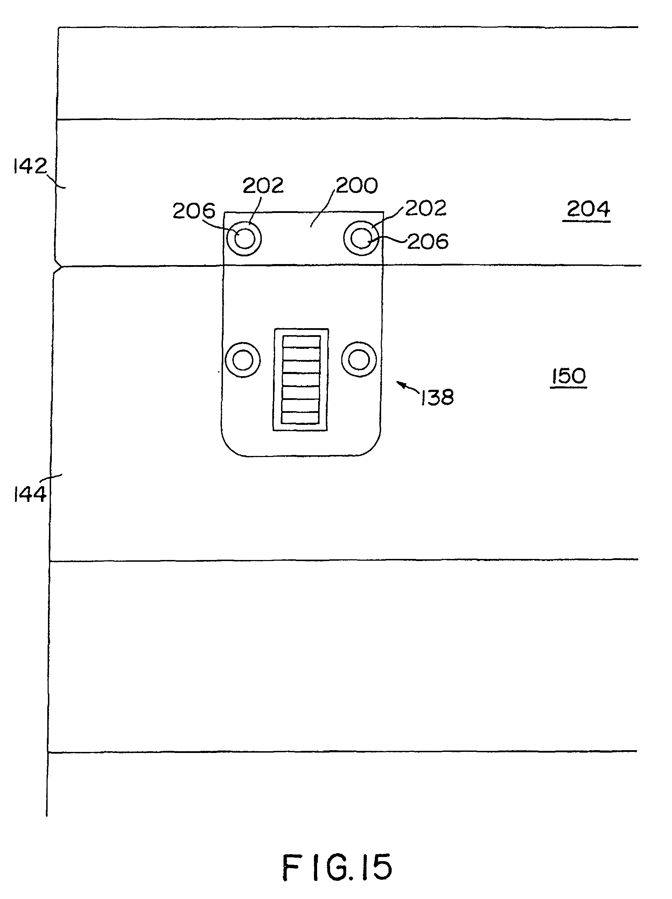

To illustrate another manner in which the counter assembly 138 can be mounted to the mold 140 without machining a pocket similar to the pockets 148 and 148' shown in FIGS. 11 and 12, respectively, an external mount is illustrated in FIGS. 13 and 15 wherein holes (not shown) are tapped in the side 150 of the lower mold half 144. To mount the counter assembly 138 to the lower mold half 144, the intermediate bosses 130 and 134 of the protective housing 104 are aligned with the tapped holes with screws then being screwed into the bosses and tapped holes to secure the counter assembly 138 to the side wall 150 of the lower mold half 144. To engage the counter actuating mechanism 106, an external block 200 is mounted to the upper mold half 142 similar to the mounting of the counter assembly 138 to the lower mold half 144. More specifically, the block 200 is provided with spaced threaded bosses 202 at either end thereof and tapped holes (not shown) are formed on the side 204 of the upper mold half 142 such that with the bosses 202 aligned with the tapped holes in the side 204, screws 206 can be screwed into the bosses 202 and into the tapped holes in the sidewall 204 so as to secure the mounting block to the upper mold half 142 for movement therewith.

The mold and counter assembly 100 described above provides an accurate indication of the number of mold cycles a particular mold has undergone while having a relatively simple yet rugged construction for use in harsh injection molding environments as well as being capable of withstanding shock stresses absorbed during movements of the mold into and out of presses and transportation of the mold between various job sites. In addition, the counter assembly 138 can be adapted to be mounted to a mold so that it is carried therewith as it is moved into and out of the press so as to reliably keep track of the number of operating cycles for the particular mold to which it is mounted. By utilizing the off-the-shelf stroke counter 102 and protective housing 104, the on-board counter assembly 138 can be provided for a relatively low cost while ensuring dependable and reliable operation thereof even in harsh injection molding operating conditions.

## Claims

1. A mold for releasably mounting in a plastic molding press and having a cavity therein for molding a plastic part, the mold comprising:
a mold body (100) having a first and second portion for molding a plastic part with the portions being movable between open and closed positions;
a mechanical counter (102) mounted on the mold for movement with the mold to and from the press, said counter (102) having a rotatable stem (110) operably connected to numerical indicia for recording a stroke count;
a linearly traveling actuator (106) on the counter (102) to be engaged by another portion of the press or another portion of the mold during each opening and closing cycle of the press,
**characterized by**
the linearly traveling actuator (106) on the counter (102) having at least one cam surface (172) for converting linear displacement of the actuator (106) of the counter (102) to angular displacement of the rotatable stem (110) so that, as the molds are moved to a closed position, the rotatable stem (110) is caused to rotate sufficiently to register a stroke count on the numerical indicia of the counter (102).

2. The mold of claim 1 **characterized by**
the counter (102) including an elongated stem (110) having a transversely extending pin (118) mounted thereto and the linearly traveling actuator (106) having a pair of cam surfaces (172) defining arcuate paths (174, 176), the linearly traveling actuator (106) being mounted on the stem such that the pin (118) engages the cam surfaces (172) and traverses the arcuate paths (174, 176) as the mold halves move to the closed position and cause the stem to rotate sufficiently for registering a stroke count on the numerical indicia of the counter (102).

3. The mold of claim 2 **characterized by**
the counter (102) including a spring (168) mounted axially around the linearly traveling actuator (106) and engaging a flange (164) on the actuator (106) to bias the actuator (106) to an extended position.

4. The mold of claim 1 **characterized by**
the counter (102) being hermetically sealed by an outer housing (108).

5. The mold of claim 1 **characterized by**
the first mold portion including a planar surface defining a part line (146) between mold portions and the one of the first and second mold portions having a pocket (148) formed therein which is adapted to receive the counter assembly (138) in the pocket (148) flush with the planar surface and the linearly traveling actuator (106) extending from the planar surface.

6. The mold of claim 1 **characterized by**
the first mold portion including a pocket (148) spaced apart from the part line (146) with a bore (184) being formed between the pocket (148) and the part line (146), and the linearly traveling actuator (106) including an elongated rod (186) extending through the bore (184) between the counter (138) and the part line (146).

## Patentansprüche

1. Form zum freiggebaren Befestigen in einer Kunststoffformpresse mit einem Hohlraum darin zum Formen eines Kunststoffteils, wobei die Form umfasst:
einen Formkörper (100) mit einem ersten und einem zweiten Abschnitt zum Formen eines Kunststoffteils, wobei die Abschnitte zwischen offenen und geschlossenen Positionen bewegbar sind;
einem mechanischen Zähler (102), der an der Form zur Bewegung mit der Form zu und von der Presse befestigt ist, wobei der Zähler (102) einen drehbaren Stab (110) aufweist, der wirksam mit einer numerischen Anzeige verbunden ist, um eine Hubzählung aufzuzeichnen;
einen linear verfahrbaren Aktuator (106) an dem Zähler (102) zum Eingriff durch einen anderen Abschnitt der Presse oder einen anderen Abschnitt der Form während jedes Öffnungs- und Schließzyklus der Presse,
**dadurch gekennzeichnet,**
**dass** der linear verfahrbare Aktuator (106) an dem Zähler (102) zumindest eine Nockenfläche (172) zur Umwandlung einer linearen Verstellung des Aktuators (106) des Zählers (102) in eine Winkelverstellung des drehbaren Stabes (110) aufweist, so dass, wenn die Formen in eine geschlossene Position bewegt werden, bewirkt wird, dass sich der drehbare Stab (110) ausreichend dreht, um eine Hubzählung an der numerischen Anzeige des Zählers (102) zu registrieren.

2. Form nach Anspruch 1,
**dadurch gekennzeichnet,**
**dass** der Zähler (102) einen länglichen Stab (110) mit einem daran befestigten, sich quer erstreckenden Stift (118) umfasst, und der linear verfahrbare Aktuator (106) ein Paar von Nockenflächen (172) aufweist, die bogenförmige Wege (174, 176) definieren, wobei der linear verfahrbare Aktuator (106) an dem Stab derart befestigt ist, dass der Stift (118) mit den Nockenflächen (172) in Eingriff steht und die bogenförmigen Wege (174, 176) durchläuft, wenn sich die Formhälften in die geschlossene Position bewegen und bewirken, dass der Stab sich ausreichend dreht, um eine Hubzählung an der numerischen Anzeige des Zählers (102) zu registrieren.

3. Form nach Anspruch 2,
**dadurch gekennzeichnet,**
**dass** der Zähler (102) eine Feder (168) umfasst, die axial um den linear verfahrbaren Aktuator (106) befestigt ist und mit einem Flansch (164) an dem Aktuator (106) in Eingriff steht, um den Aktuator (106) in eine ausgefahrene Stellung vorzuspannen.

4. Form nach Anspruch 1,
**dadurch gekennzeichnet,**
**dass** der Zähler (102) durch ein Außengehäuse (108) hermetisch abgedichtet ist.

5. Form nach Anspruch 1,
**dadurch gekennzeichnet,**
**dass** der erste Formabschnitt eine planare Fläche umfasst, die eine Trennlinie (146) zwischen Formabschnitten definiert, und wobei der eine der ersten und zweiten Formabschnitte eine darin gebildete Tasche (148) aufweist, die derart ausgebildet ist, um die Zähleranordnung (138) in der Tasche (148) in Flucht mit der planaren Fläche und dem linear verfahrbaren Aktuator (106) aufzunehmen, der sich von der planaren Fläche erstreckt.

6. Form nach Anspruch 1,
**dadurch gekennzeichnet,**
**dass** der erste Formabschnitt eine Tasche (148) aufweist, die von der Trennlinie (146) beabstandet ist, wobei eine Bohrung (184) zwischen der Tasche (148) und der Trennlinie (146) ausgebildet ist, und wobei der linear verfahrbare Aktuator (106) eine längliche Stange (186) umfasst, die sich durch die Bohrung (184) zwischen dem Zähler (138) und der Trennlinie (146) erstreckt.

## Revendications

1. Moule devant être monté de façon désolidarisable, dans une presse de moulage de matière plastique et ayant une cavité pour mouler une pièce en matière plastique, le moule comprenant :
un corps de moule (100) ayant une première et une deuxième parties pour mouler une pièce en matière plastique, les parties étant mobiles entre des positions ouverte et fermée;
un compteur mécanique (102) monté sur le moule, afin de se déplacer avec le moule vers et depuis la presse, ledit compteur (102) ayant une tige rotative (110) reliée fonctionnellement à des repères numériques, afin d'enregistrer un comptage de courses effectuées;
un actionneur de déplacement linéaire (106), monté sur le compteur (102) pour être mis en prise avec une autre partie de la presse ou une autre partie du moule durant chaque cycle d'ouverture et de fermeture de la presse,
**caractérisé par**
**le fait que** l'actionneur de déplacement linéaire (106) monté sur le compteur (102) comporte au moins une surface de came (172) pour convertir le déplacement linéaire de l'actionneur (106) du compteur (102) en un déplacement angulaire de la tige rotative (110), de manière que, lorsque les moules sont déplacés en une position fermée, la tige rotative (110) soit entraînée en rotation suffisamment pour enregistrer un comptage de course effectuée sur les repères numériques du compteur (102).

2. Moule selon la revendication 1, **caractérisé par**
**le fait que** le compteur (102) comprend une tige (110) allongée ayant un téton (118) s'étendant transversalement, monté sur lui, et l'actionneur de déplacement linéaire (106) comporte une paire de surfaces de came (172) définissant des trajectoires (174, 176) arquées, l'actionneur de déplacement linéaire (106) étant monté sur la tige de manière que le téton (118) vienne en prise avec les surfaces de came (172) et traverse les trajectoires (174, 176) arquées lorsque les demi-moules se déplacent à la position fermée et provoque une rotation suffisante de la tige pour enregistrer un comptage de course effectuée sur les indices numériques du compteur (102).

3. Moule selon la revendication 2, **caractérisé par**
**le fait que** le compteur (102) comprend un ressort (168), monté axialement autour de l'actionneur de déplacement linéaire (106) et venant en prise avec une bride (164), prévue sur l'actionneur (106) pour déplacer l'actionneur (106) à une position déployée.

4. Moule selon la revendication 1, **caractérisé par**
**le fait que** le compteur (102) est enfermé hermétiquement par un boîtier extérieur (108).

5. Moule selon la revendication 1, **caractérisé par**
**le fait que** la première partie de moule comprend une surface plane définissant une ligne de séparation (146) entre les parties de moule, et l'une des première et deuxième parties de moule ayant une poche (148) formée en son sein, adaptée pour recevoir l'ensemble de compteur (138) dans la poche (148), en affleurement avec la surface plane, et l'actionneur de déplacement linéaire (106) s'étendant depuis la surface plane.

6. Moule selon la revendication 1, **caractérisé par**
**le fait que** la première partie de moule comprend une poche (148) espacée de la ligne de séparation (146), un perçage (184) étant formé entre la poche (148) et la ligne de séparation (146), et l'actionneur (106) de déplacement linéaire comprenant une tige (186) allongée, s'étendant à travers le perçage (184), entre le compteur (138) et la ligne de séparation (146).
